# EUROPEAN PATENT APPLICATION

(11) **EP 2 090 882 A2**
(43) Date of publication of application: **19.08.2009**
(21) Application number: 08021060.2
(22) Date of filing: 04.12.2008
(51) Int. Cl.: G01N 21/64, G02B 21/00

(54) **Drug discovery screening device**

(30) Priority: 14.02.2008 JP 2008032616
(71) Applicant: Yokogawa Electric Corporation, Tokyo 180-8750 (JP)
(72) Inventor: Suzuki, Tashiyuki, Musashino-shi Tokyo 180-8750 (JP); Kei, Takayuki, Musashino-shi Tokyo 180-8750 (JP)
(74) Representative: Goddar, Heinz J.

(57) **Abstract**

An object of the invention is to implement a drug discovery screening device having high throughput and high accuracy. The drug discovery screening device is provided with a Nipkow disc type confocal scanner (90) for irradiating excitation light on samples (2) placed on a well plate (1), and executing image processing based on fluorescent signals (12a, 12b) from the samples (2), and comprises a confocal scanner (90) for irradiating a plurality of excitation lights and to which a plurality of fluorescent signals (12a, 12b) are incident, and a plurality of objectives lenses for irradiating a plurality of excitation lights emitted from the confocal scanner (90) on the plurality of samples (2), to which the plurality of fluorescent signals (12a, 12b) generated from the plurality of samples (2) are incident, and bringing the plurality of fluorescent signals (12a, 12b) to the confocal scanner (90).

## Description

### FIELD OF THE INVENTION

The invention relates to a drug discovery screening device having high accuracy by use of a fluorescence microscopic system, and particularly to a drug discovery screening device having high throughput.

### BACKGROUND OF THE INVENTION

In a drug discovery screening device, light having a specific wavelength is irradiated on samples placed on wells (holes) arranged in an array on a well plate so as to excite the samples, and fluorescent images emitted from the excided samples are enlarged by a microscopic system, so that the enlarged image are acquired by a camera. In this case, since the fluorescent images are acquired from all the wells, the well plate is shifted by an X-Y stage.

Next, the images acquired by the camera are subjected to image processing, thereby finding a sample which becomes a candidate of medicines based on the result of image processing. To enhance the quality of the images, a confocal scanner is disposed between the microscope and the camera.

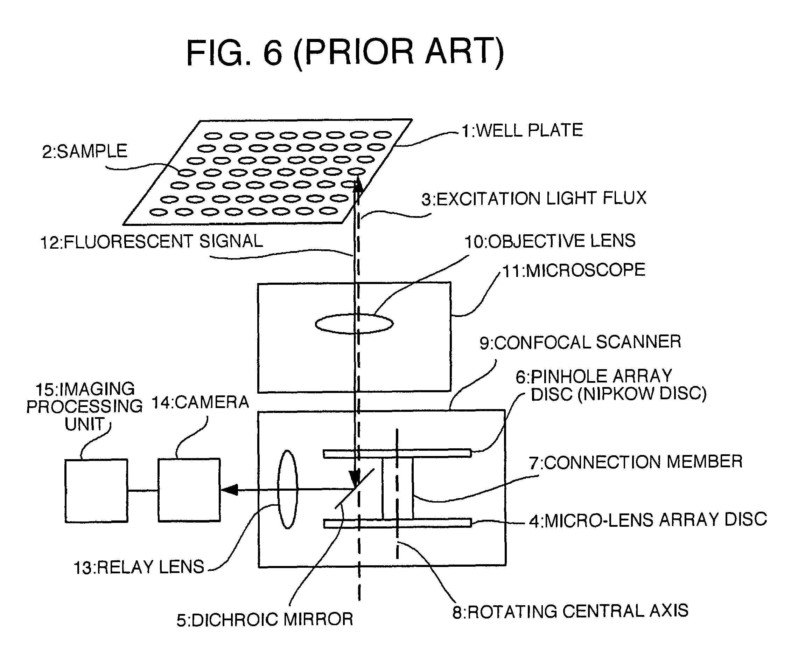

Fig. 6 is a view showing a configuration of a conventional drug discovery screening device.

In Fig. 6, a confocal scanner 9 is connected to a microscope 11. Illuminating parallel excitation light flux 3 (dotted lines) which is incident to the confocal scanner 9 is converted into individual fluxes by a micro-lens array disc 4. The excitation light flux 3 transmits through a dichroic mirror 5 formed of a flat plate mirror having spectroscopic characterization, and passes through each pinhole of a pinhole array disc 6 (also called as Nipkow disc), then it is focused on a sample 2 placed on the well plate 1 though an objective lens 10 of the microscope 11, thereby exciting fluorescent sample. The micro-lens array disc 4 and the pinhole array disc 6 are rotated around a rotating central axis 8 in a state where they are mechanically connected to each other by a connection member 7.

A fluorescent signal 12 generated by a fluorescent reagent of the sample 2 passes again through the objective lens 10, and is focused on each pinhole of the pinhole array disc 6. The fluorescent signal 12 passed through each pinhole is reflected by the dichroic mirror 5, thereby forming a confocal optical image on a camera 14 through a relay lens 13. An image processing unit 15 executes appropriate image processing and data processing for displaying dynamic state of cells and so forth upon receipt of the image signal from the camera 14.

With the configuration of the conventional drug discovery screening device, since a plane on which each pinhole of the pinhole array disc 6 is arranged, a plane on the sample 2 to be observed, and a light-detecting surface of the camera 14 are disposed in an optical conjugate relation with each other, an optical sectional image of the sample 2, i.e. a confocal image is formed on the camera 14. Accordingly, since the confocal image of the sample 2 can be formed on the light-detecting surface of the camera 14, when the well plate 1 on which the multiple samples 2 to be inspected are arranged in a matrix is shifted relative to the microscope 11 and the confocal scanner 9, the confocal images of all samples can be acquired by the camera at high speed.

The following patent document has been known as a prior art of such a confocal telescopic device.

[Patent Document 1] JP 2002-062480A

Meanwhile, according to the conventional drug discovery screening device, there is only one system of microscope, wherein one objective lens is disposed relative to one confocal microscope. Accordingly, it takes time to acquire fluorescent images of a large quantity of samples which are arranged in a lattice shape, and if the objective lens is built in a drug discovery screening device, there was a problem in that there were limitations to throughput as the device.

### SUMMAY OF THE INVENTION

The invention has been made to solve the problem of the prior art and it is therefore an object of the invention to implement a drug discovery screening device having high accuracy.

To achieve the object of the invention, the drug discovery screening device for irradiating excitation light on samples placed on a well plate, and executing image processing based on fluorescent signals from the samples, said drug discovery screening device is characterized in comprising a plurality of objective lenses for irradiating a plurality of excitation lights on a plurality of samples, respectively, thereby focusing a plurality of fluorescent signals generated from the plurality of samples, a pinhole array disc to which the plurality of fluorescent signals are incident through the plurality of objective lenses, and a plurality of dichroic mirrors for reflecting the plurality of fluorescent signals passed through the pinhole array disc.

The drug discovery screening device may further comprise a micro-lens array disc for focusing a plurality of excitation lights to be incident, and bringing the plurality of excitation lights to the pinhole array disc through the plurality of dichroic mirrors.

The drug discovery screening device may further comprise a plurality of imaging lenses for focusing the plurality of fluorescent signals emitted respectively form the plurality of objective lenses on pinhole faces of the pinhole array disc, respectively.

The drug discovery screening device may further comprise a plurality of imaging cameras to which a plurality of fluorescent signals emitted respectively from the plurality of dichroic mirrors are incident.

The drug discovery screening device wherein an interval between two objective lenses is the integral multiple of an interval between respective wells of the well plate.

The drug discovery screening device wherein four objective lenses are disposed on each apex of a square having one side equal to the length of the integral multiple of an interval between respective wells of the well plate.

According to the drug discovery screening device of the invention, it is possible to provide a drug discovery screening device provided with a multihead microscope function capable of picking up images of a plurality of samples in a plurality of wells as confocal images thereof at a time because the drug discovery screening device of the invention for irradiating excitation light on samples placed on a well plate, and executing image processing based on fluorescent signals from the samples is characterized in comprising a plurality of objective lenses for irradiating a plurality of excitation lights on a plurality of samples, respectively, thereby focusing a plurality of fluorescent signals generated from the plurality of samples, a pinhole array disc to which the plurality of fluorescent signals are incident through the plurality of objective lenses, and a plurality of dichroic mirrors for reflecting the plurality of fluorescent signals passed through the pinhole array disc.

### BREIF DESCRIPTION OF THE DRAWINGS

Fig. 1 is a view showing a configuration of a first embodiment of a drug discovery screening device according to the invention;
Fig. 2 is a plan view of a partial configuration of the drug discovery screening device showing the dispositiont of each optical element within a confocal scanner;
Fig. 3 is a plan view of a partial configuration of a second embodiment of a drug discovery screening device according to the invention;
Fig. 4 is a view for explaining the operation of a well plate in a first disposition example thereof;
Fig. 5 is a view for explaining the operation of a well plate in a second disposition example thereof; and
Fig. 6 is a view showing a configuration of the conventional drug discovery screening device.

### PREFERRED EMBODIMENTS FOF THE INVENTION

Preferred embodiments of the invention are now described in detail with reference to the attached drawings.

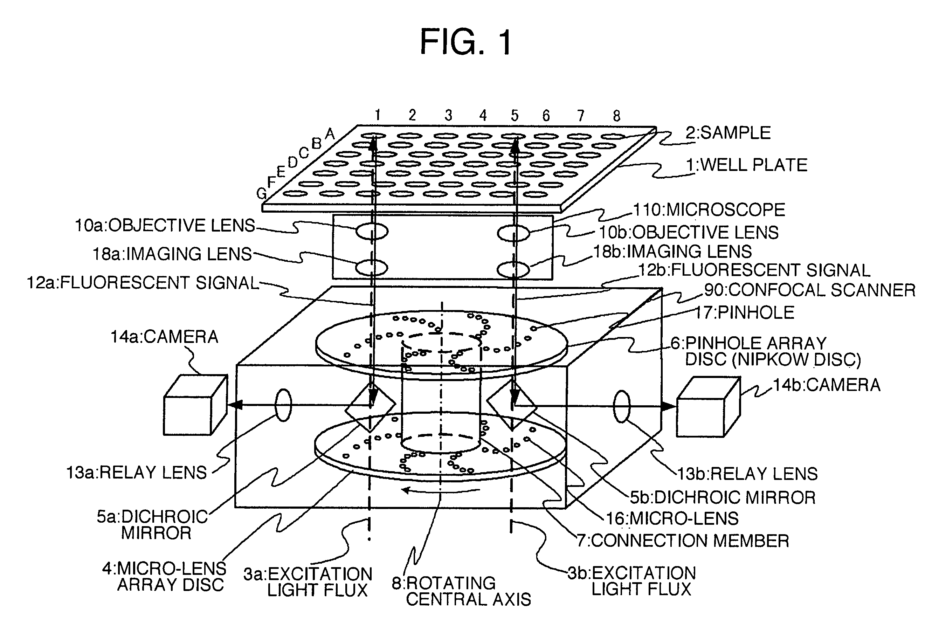

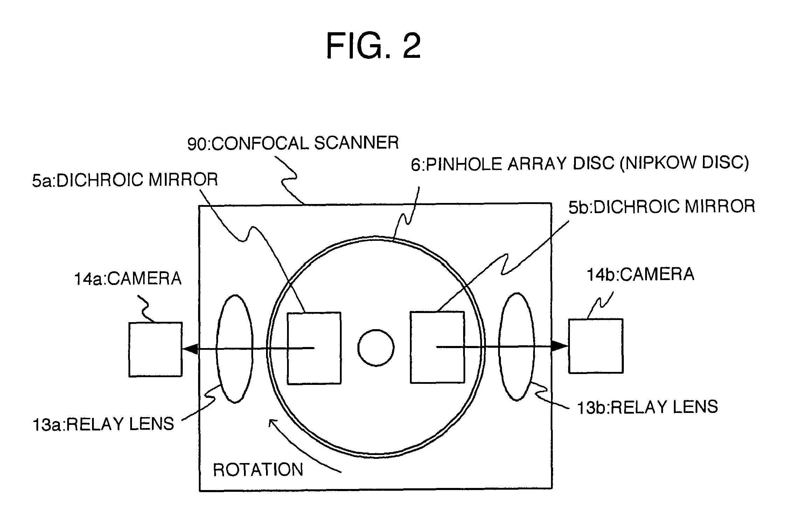

Fig. 1 shows one embodiment of a drug discovery screening device according to the invention, and it is a view for explaining a configuration of the drug discovery screening device having a confocal optical dual-system. The same elements as those in Fig. 6 are denoted by the same reference numerals and the overlapped explanation thereof is omitted. Fig. 2 is a plan view of a partial configuration of the drug discovery screening device showing the disposition of each optical element inside a confocal scanner.

Two excitation light fluxes 3a, 3b (dotted lines) are incident to a micro-lens array disc 4 from beneath the figure, and they are converged into individual fluxes. The excitation light fluxes 3a, 3b transmit two dichroic mirrors 5a, 5b each formed of a flat plate mirror having spectroscopic characterization, and pass through individual pinholes of a pinhole array disc 6, and they are focused on individual samples 2 placed on a well plate 1 by two imaging lenses 18a, 18b and two objective lenses 10a, 10b of a microscope 110, thereby exciting fluorescent sample.

When the samples 2 are excited by two excitation light fluxes 3a, 3b each having a specific wavelength, they generate fluorescent signals 12a, 12b (solid lines in Fig. 1) wavelengths of which are longer than those of the excitation light fluxes 3a, 3b. The fluorescent signals 12a, 12b are focused on the objective lenses 10a, 10b and the imaging lenses 18a, 18b in the microscope 110, and form images on the surfaces of individual pinholes of the pinhole array disc 6 within a confocal scanner 90.

The fluorescent signals 12a, 12b passed through individual pinholes of the pinhole array disc 6 are respectively reflected by the dichroic mirrors 5a, 5b, and confocal optical images are formed on cameras 14a, 14b by relay lenses 13a, 13b.

Meanwhile, with the foregoing configuration of the drug discovery screening device, it is assumed that an interval between two objective lenses 10a, 10b is equal to the integral multiple of an interval between respective wells of the well plate 1.

The dichroic mirrors 5a, 5b are designed to have characteristics through which the excitation light fluxes pass and by which fluorescent signals are reflected so that excitation light fluxes and fluorescent signals are mixed with or separated from each other, and they are installed between the pinhole array disc 6 and the micro-les array disc 4.

Further, since a plane on which the pinholes of the pinhole array disc 6 are arranged, a plane on the samples 2 to be observed, and light-detecting surfaces of the cameras 14a, 14b are disposed in an optical conjugate relation with each other, optical sectional images of the sample 2, i.e. confocal images are formed on the cameras 14a, 14b. Accordingly, since the confocal images of the samples 2 can be formed on the light-detecting surfaces of the camera 14a, 14b, when the well plate 1 on which the multiple samples 2 to be inspected are arranged in a matrix is shifted relative to the microscope 11 and the confocal scanner 90 by an XY stage (not shown), the confocal images of all samples can be acquired by the cameras at high speed.

An operation of the drug discovery screening device shown in Fig. 1 is described next.

In Fig. 1, vertical positions of individual wells which are arranged in a matrix on the well plate 1 are expressed in alphabets and lateral positions thereof are expressed in numerals. In Fig. 1, there is shown a state where the confocal image of the sample placed on the well arranged in A1 (hereinafter referred to as A1 well) and that of the sample placed on the well arranged in A5 (hereinafter referred to as A5 well) are simultaneously acquired. Upon completion of the acquisition of the images of the sample placed on A1 well and A5 well, the well plate 1 is shifted by the XY stage to the position of next A2 well and that of A6 well so that the confocal images of the samples placed on the A2 well and A6 well are simultaneously acquired. Subsequently, in the same manner as the foregoing manner, the shifting of the well plate 1 and the acquisition of the images are repeated, thereby acquiring confocal images of the samples two by two at a time. An example of the moving sequence by the XY stage in this case is shown hereinafter.
A1, A5
A2, A6
A3, A7
A4, A8
B4, B8
B3, B7
B2, B6
B1, B5
C1, C5
C2, C6
...

According to the drug discovery screening device of the first embodiment, since two dichroic mirrors 5a, 5b are provided within the confocal scanner to form a confocal optical dual-system, focal images of two samples are acquired at a time relative to the arrayed samples, so that the throughput of the drug discovery screening device having high accuracy can be improved twice that of the conventional drug discovery screening device.

Further, since one confocal scanner is shared by two optical systems, a plurality of optical systems and a plurality of wells can be subjected to alignment easily with high accuracy.

Meanwhile, it is possible to measure not less than three samples at a time by disposing not less than three optical systems each comprising an objective lens, imaging lens and dichroic mirror.

Further, it is possible to dispense with the micro-lens array 4 in case where samples generating sufficiently bright fluorescent signals are subjected to inspection.

Meanwhile, the mixing/separating means of the excitation light fluxes and fluorescent signals is not limited to the dichroic mirrors, it may be replaced by an arbitrary means capable of mixing and separating two light fluxes.

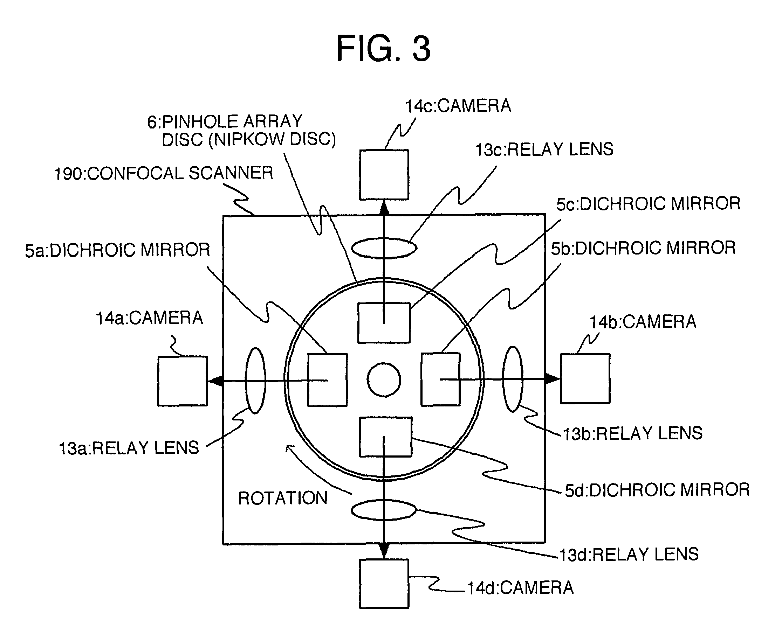

Fig. 3 shows a second embodiment of a drug discovery screening device according to the invention, and it is a plan view of a partial configuration thereof showing the disposition of each optical element within a confocal scanner in the case of a confocal optical fourfold-system. The same elements as those in Fig. 1 and Fig. 2 are denoted by the same reference numerals and the overlapped explanations thereof are omitted.

The drug discovery screening device shown in Fig. 3 shows a configuration wherein a new confocal optical dual-system (reference numerals c and d) is added to the positions orthogonal to the confocal optical dual-system (references a and b) shown in Fig. 2. In the confocal optical fourfold-system comprising dichroic mirrors 5a to 5d, imaging lenses 18a to 18d (not shown), objective lenses 10a to 10d (not shown), relay lenses 13a to 13d, and cameras 14a to 14d, the four objective lenses 10a to 10d are disposed on each apex of a square having one side equal to the length of the integral multiple of an interval between respective wells of a well plate 1.

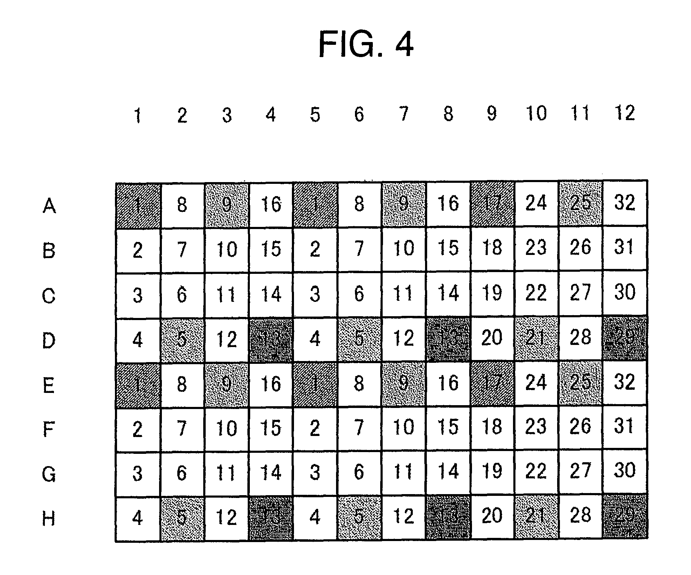

An operation of the drug discovery screening device shown in Fig. 3 is now described with reference to Fig. 4 for explaining the operation of the well plate 1 in a first disposition example thereof.

In the case of the example of 96 well plates ([A∼H]×[1∼ 12]), as illustrated in the disposition table shown in Fig. 4, an example of the shifting sequence by the XY stage 1 becomes as follows.
A1, E 1, A5, E5
B 1, F 1, B5, F5
C1, G1, C5, G5
D1, H1, D5, H5
D2, H2, D6, H6
C2, G2, C6, G6

According to the drug discovery screening device of the second embodiment, since four dichroic mirrors 5a, 5b are provided within the confocal scanner to form the confocal optical fourfold-system, focal images of four samples are acquired at a time relative to the arrayed samples, so that the throughput of the drug discovery screening device having high accuracy can be improved more than that of the drug discovery screening device of the first embodiment.

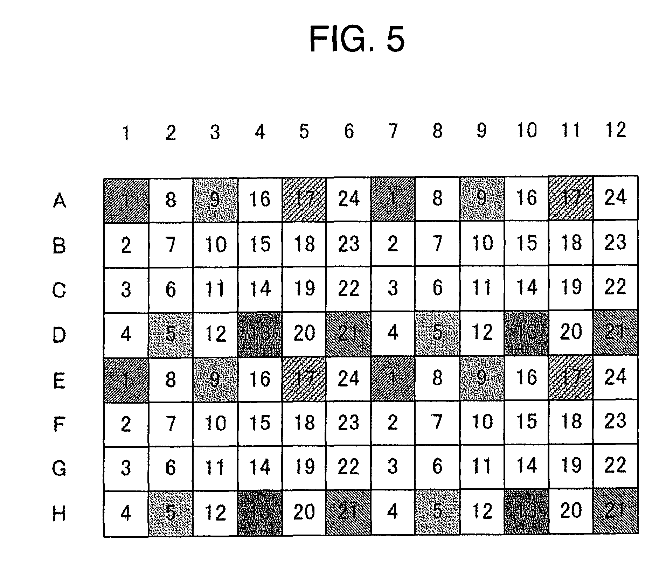

The four objective lenses 10a to 10d may be disposed such that they are disposed on each apex of a rectangle having one side equal to the length of the integral multiple of an interval between respective wells of the well plate 1. For example, as illustrated in Fig. 5 for explaining the operation of the well plate 1 in the second disposition example thereof, assuming that the initial positions are A1, E1, A7, E7, the confocal images of the samples on all the wells can be acquired by 23 shiftings of the well plate 1.

As mentioned in detail above, according to the second embodiment of the drug discovery screening device, it is possible to enhance the throughput of the drug discovery screening device with high accuracy by providing a plurality dichroic mirrors within a confocal scanner to form a confocal optical multiple-system so as to acquire confocal images of a plurality of samples at a time relative to the arrayed samples.

Meanwhile, at present there are following types of well plate (outer shapes thereof are all the same)
2 columns × 3 rows = 6 wells
4 columns × 6 rows = 24 wells
8 columns × 12 rows = 96 wells
16 columns × 24 rows = 384 wells
32 columns × 48 rows = 153 wells

Central positions of respective wells of these well plates are different from one another depending on the type of plate, however, if the difference therebetween is adjusted by providing the pitch conversion function of the objective lenses, all the wells are compatible.

The invention is not limited to the foregoing embodiments and includes may changes and modifications without departing from the essence of the invention.

## Claims

1. A drug discovery screening device for irradiating excitation light (31, 3b) on samples (2) placed on a well plate (1), and executing image processing based on fluorescent signals (12a, 12b) generated from the samples, said drug discovery screening device comprising:
a plurality of objective lenses (10a, 10b) for irradiating a plurality of excitation lights (3a, 3b) on a plurality of samples (2), respectively, thereby focusing a plurality of fluorescent signals generated from the plurality of samples (2);
a pinhole array disc (6) to which the plurality of fluorescent signals (12a, 12b) are incident through the plurality of objective lenses (10a, 10b); and
a plurality of dichroic mirrors (5a, 5b) for reflecting the plurality of fluorescent signals (12a, 12b) passed through the pinhole array disc (6).

2. The drug discovery screening device according to Claim 1, further comprising a micro-lens array disc for focusing a plurality of excitation lights (3a, 3b) to be incident, and bringing the plurality of excitation lights to the pinhole array disc (6) through the plurality of dichroic mirrors (5a, 5b).

3. The drug discovery screening device according to Claim 1, further comprising a plurality of imaging lenses for focusing the plurality of fluorescent signals (12a, 12b) emitted respectively form the plurality of objective lenses (10a, 10b) on pinhole faces of the pinhole array disc (6), respectively.

4. The drug discovery screening device according to Claim 1, further comprising a plurality of imaging cameras (14a, 14b) to which the plurality of fluorescent signals (12a, 12b) emitted respectively from the plurality of dichroic mirrors (5a, 5b) are incident.

5. The drug discovery screening device according to Claim 1, wherein an interval between two objective lenses (10a, 10b) is the integral multiple of an interval between respective wells of the well plate (1).

6. The drug discovery screening device according to Claim 1, wherein four objective lenses (10a to 10d) are disposed on each apex of a square having one side equal to the length of the integral multiple of an interval between respective wells of the well plate (1).
